# EUROPEAN PATENT APPLICATION

(11) **EP 2 216 093 A1**
(43) Date of publication of application: **11.08.2010**
(21) Application number: 09305091.2
(22) Date of filing: 30.01.2009
(51) Int. Cl.: B01J 19/00

(54) **In situ formation and deposition of palladium Pd(0) in reactors**

(71) Applicant: Corning Incorporated, Corning NY 14831 (US)
(72) Inventor: HORN, Clemens, 91630 Guibeville (FR); NOYERIE, Carine, 77210 Samoreau (FR)
(74) Representative: Le Roux, Martine

(57) **Abstract**

The invention relates mainly to a process for the *in situ* generation of a catalyst (Pd(0)) and the deposition of said catalyst on the internal wall(s) of a glass, glass-ceramic or ceramic reactor. The invention further relates to a reactor, preferably a microfluidic device, as may be obtained by the *in situ* generation and deposition of palladium Pd(0) on its internal wall(s) carried out according to said process. The invention also globally concerns catalytic processes including said process.

## Description

### FIELD OF THE INVENTION

The invention relates mainly to a process for the *in situ* generation of a catalyst (Pd(0)) and the deposition of said catalyst on the internal wall(s) of a glass, glass-ceramic or ceramic reactor. The invention further relates to a reactor, preferably a microfluidic device, as may be obtained by the *in situ* generation and deposition of palladium Pd(0) on its internal wall(s) carried out according to said process. The invention also globally concerns catalytic processes including said process.

### TECHNICAL BACKGROUND

Heterogeneous and homogeneous catalysts are used widely in organic synthesis. One of the most used catalysts is palladium either in an oxidation state of +II or 0. Palladium is a somewhat expensive metal, but it is much cheaper than rhodium and platinum. The use of palladium instead of rhodium and platinum thus represents an economical source of catalysts. Palladium now has wide-spread use not only in chemical laboratories, but also in the chemical industry. It exists in several forms, in complexes for homogeneous catalysis or for heterogeneous catalysis fixed on a surface, preferably porous like carbon ("Palladium on Carbon"), or in a matrix.

Various palladium catalysts are used in different kinds of reactors including microcrofluidic devices. The immobilization of the palladium requires in all cases a certain treatment of the microchannels of the microfluidic device, either preparing the surface with tethering ligands or the introduction of the catalyst via washcoating or during the microchannel assembly. In particular, the European patent application EP 1 534 421 discloses a catalyst system comprising a tethering catalyst composition or a tethered chiral auxiliary disposed in a microchannel. The formation of this catalyst system is rather difficult. Furthermore, such a catalyst system requires a long period of time (up to seven days) in order to be formed.

There have been efforts made to electrolessly deposit rhodium or platinum in a microchannel apparatus. The patent application US 2008/0214884 describes that such a method of electrolessly depositing rhodium or platinum is usually achieved after introducing soluble platinum or rhodium complexes in microchannels and reducing them with hydrazine. This procedure lasts up to 24 hours and necessitates the use of a complex free from chloride and nitrite.

All catalysts lose their activity over time, for various reasons like leaching and poisoning. This problem is normally solved by using cleaner starting materials, recycling/activation cycles, or replacement of the catalyst.

Despite these and other efforts, there remains a need to develop an efficient process for the *in situ* generation of a catalyst and the deposition of said catalyst inside a reactor, which can be easily and rapidly carried out.

### SUMMARY OF THE INVENTION

The present invention provides a process for the *in situ* generation of a catalyst and its deposition on the internal wall(s) of a glass, glass-ceramic or ceramic reactor, comprising:
a) contacting said internal wall(s) of said reactor with an inorganic base solution;
b) contacting the thus pretreated internal wall(s) with a solution containing a precursor of palladium Pd(0) while subjecting said solution to a reduction reaction, in order to deposit the Pd(0) formed *in situ* onto the pretreated internal wall(s).

In another aspects, the invention provides a reactor, preferably a microfluidic device, as may be obtained by the *in situ* generation and deposition of palladium Pd(0) on its internal wall(s) carried out according to said process of the invention.

The invention also provides a catalytic process, including the *in situ* generation of a catalyst and the deposition of said catalyst on the internal wall(s) of a glass, glass-ceramic or ceramic reactor carried out according to said process of the invention and/or carried out inside a reactor of the invention.

### BRIEF DESCRIPTION OF THE DRAWINGS

FIG. 1 shows a SEM micrograph (at a 5000-fold magnification) of Pd(0) particles deposited onto internal wall(s) of a glass microfluidic device according to the process of the invention.
FIG. 2 shows a SEM micrograph (at a 20000-fold magnification) of Pd(0) particles deposited onto internal wall(s) of a glass microfluidic device according to the process of the invention.
FIG. 3 illustrates the hydrogenation of cinnamon ethyl ester carried out in a glass microfluidic device according to the process of the invention.
FIG. 4 illustrates the hydrogenation of cinnamon ethyl ester carried out in a glass reactor (batch reaction) according to the process of the invention.
FIG. 5 illustrates the reduction of 2-nitrobenzaldehyde carried out in a glass microfluidic device according to the process of the invention.

### DESCRIPTION OF THE INVENTION

In a first aspect, the invention provides a process for the *in situ* generation of a catalyst and the deposition of said catalyst on the internal wall(s) of a glass, glass-ceramic or ceramic reactor, comprising:
a) contacting said internal wall(s) of said reactor with an inorganic base solution;
b) contacting the thus pretreated internal wall(s) with a solution containing a precursor of palladium Pd(0) while subjecting said solution to a reduction reaction, in order to deposit the Pd(0) formed *in situ* onto the pretreated internal wall(s).

The process of the invention characteristically includes a pretreatment of the internal wall(s) of the reactor. Such a pretreatment (step a) has not to be very long. The positive effect on the further deposition of palladium Pd(0) (step b) is observed with a short pretreatment (a few minutes). To have a significant effect, the inventors recommend an advantageous pretreatment of at least about 5 minutes, usually between 5 minutes and 2 hours, and more advantageously of about 1 hour.

Said pretreatment modifies the surface of the internal wall(s) of the reactor and surprisingly such a modification allows the direct deposition of palladium Pd(0) (without any intermediate layer positioned between the internal wall(s) and the catalyst), as particles, in mild conditions, and apparently also stabilizes the Pd(0) deposited on said surface.

Thus the process is usually (and advantageously) carried out under mild conditions, typically ambient temperature and atmospheric pressure. By ambient temperature is understood a temperature between 15 and 25°C, preferably about 20°C.

Prior art teaches that processes for palladium reduction and deposition require more severe conditions of temperature and/or pressure. Operating in mild conditions constitutes thus a major advantage of the present invention.

Surprisingly it has been demonstrated that the process of the present invention does not allow platinum, rhodium and ruthenium precursors to be reduced by said process in the same mild conditions.

Also surprisingly, while carrying out a reaction using Pd(0) as catalyst in a reactor whose internal wall(s) has(have) been conditioned or is(are) conditioned by the process of the present invention (see below), said reaction using Pd(0) as catalyst may be performed under mild conditions of temperature and pressure and/or milder conditions than those known in the prior art.

In a preferred embodiment of the invention, the reactor is a glass reactor.

The pretreatment of the internal wall(s) with an inorganic base solution constitutes an essential step of the process. No palladium formation and deposition is observed, under mild conditions, without prior execution of this pretreatment step. The inorganic base solution is advantageously aqueous. More advantageously, the inorganic base is selected from the group consisting of hydroxides of the alkali metals, carbonates of the alkali metals and mixtures thereof, preferably sodium hydroxide, sodium carbonate, potassium hydroxide and potassium carbonate and more preferably sodium hydroxide. The concentration of the inorganic base is advantageously equal to or superior to 0.01 N.

As used herein, the term "precursor of palladium Pd(0)" refers to a palladium compound of a higher oxidation state, typically Pd(II), which when subjected to reducing conditions is converted to palladium Pd(0).

In a preferred embodiment of the invention, the precursor of palladium Pd(0) is soluble in an aqueous solution. Some well-known palladium(II) compounds which may be used as precursors include, but are not limited to, the precursors selected from the group consisting of palladium(II) chloride, palladium(II) acetate, palladium(II) trifluoroacetate, palladium(II) bromide, palladium(II) nitrate, palladium(II) sulphate, palladium(II) acetylacetonate and mixtures thereof, preferably palladium(II) chloride.

In another preferred embodiment of the invention, the reduction reaction is carried out with a gaseous or liquid reducing agent, preferably hydrogen gas or a solution, saturated or not, of hydrogen gas in water, an organic solvent or organic solvent mixture, and more preferably hydrogen gas. The reducing agent may equally be chosen from chemical sources of hydrogen gas known to the one skilled in the art, e.g. 1,4-cyclohexadiene, hydrazine.

According to a first variant, the process is carried out in a reactor suitable for batch reactions. Batch reactions are chemical reactions conventionally carried out in a reaction vessel.

According to a second variant, the process is carried out in a reactor suitable for continuous reactions, preferably in a microfluidic device. Microfluidic devices are well-known from the man skilled in the art. Such microfluidic devices are more particularly disclosed in the European patent applications EP 1 679 115 A1, EP 2 017 000 A1 and EP 1 992 404 A2. The microchannels of such microfluidic devices generally have a diameter comprised between 500 nanometers and 5 millimeters or more.

Step b of the process of the invention may be carried out before any use of the reactor, i.e. before carrying out any catalytic reaction (using the Pd(0) deposited as catalyst) inside the reactor.

Alternatively, step b of the process may be carried out while using the reactor, *i*.*e*. while carrying out a catalytic reaction (using the Pd(0) deposited as catalyst) inside the reactor. In this case, the formation and deposition of Pd(0) occurs concomitantly with another reaction using the formed Pd(0) as catalyst. This specific variant is particularly preferred and advantageous in a context where the reducing agent used for the reduction of Pd(II) to Pd(0) is also employed as one of the reactants of the reaction in which Pd(0) is a catalyst.

In a preferred embodiment of this variant, step b is carried out continuously or discontinuously. Thus, the precursor of Pd(0) may either be added portionwise or continuously. Such an addition is particularly advantageous in reference to any leaching and/or poisoning problem.

The reactor is advantageously intended to be used (previous deposit of Pd(0)) or used (concomitant deposit of Pd(0)) for carrying out reduction reactions, more particularly selected from the group consisting of hydrogenation, Heck reaction, Stille coupling and Negishi coupling. The preferred reactions carried out in the reactor are the reactions in which the hydrogen gas serves at the same time as reducing agent of the precursor of Pd(0) and as a reactant in said reactions.

Thus the person skilled in the art perfectly understands that the invention also globally concerns all catalytic processes (liquid, liquid/liquid, gas/liquid, gas/gas, gas) including the catalyst *in situ* generation and deposition process of the invention.

In another aspect, the invention provides a reactor, preferably a microfluidic device, as may be obtained by the *in situ* generation and deposition of palladium Pd(0) on its internal wall(s) carried out according to the process as previously described. The deposited palladium Pd(0) characteristically appears at least temporarily stabilized on the wall(s) of the reactor. Such deposited palladium is not immediately washed away or eliminated by incoming reactant flows. The occurred phenomenon is not presently explained by the inventors.

In a preferred embodiment of the reactor, the particle diameters of Pd(0) deposited on the internal wall(s) are equal to or less than 350 nm, preferably comprised between 50 and 300 nm. It is understood by the use of the term "particle", an isolated particle and/or agglomerate. The Pd(0) particles are usually deposited in a thin monolayer onto the internal wall(s) of the reactor. This thin layer of catalyst in a microfluidic device provides various advantages like increased product selectivity and reduced pressure drop. Furthermore, since the control of the reaction temperature is very accurate, the product formed in the microfluidic device is obtained in a higher yield than in the prior art.

Lastly, the invention also provides a catalytic process (liquid, liquid/liquid, gas/liquid, gas/gas, gas), including the *in situ* generation of a catalyst and the deposition of said catalyst on the internal wall(s) of a glass, glass-ceramic or ceramic reactor carried out according to the process of the invention and/or carried out inside a reactor of the invention.

Other aims, characteristics and advantages of the invention will appear clearly to the person skilled in the art upon reading the explanatory description including the below Examples which are given simply as an illustration and which in no way limit the scope of the invention.
The Examples make up an integral part of the present invention, and any characteristic which appears novel with respect to any prior state of the art from the description taken in its entirety, including the Examples, makes up an integral part of the invention in its function and in its generality.
Thus, every example has a general scope.
Furthermore, in the Examples, all percentages are given by weight, unless indicated otherwise, temperature is expressed in degrees Celsius unless indicated otherwise, and the pressure is atmospheric pressure, unless indicated otherwise.

### EXAMPLES

### General conditions

All compounds were obtained from commercial sources and used without further purification. Solvent used were technical grade. All chemical reactions were carried out in a glass microfluidic device (Corning 1737 Glass coated with a borosilicate glass frit as described in WO 2007/063092 A1, or Corning Eagle Xg™) unless otherwise stated. These reactions were performed adiabatically at room temperature (about 21°C) and at atmospheric pressure at the channel end.

### Example 1: Deposition of Pd(0) onto the internal wall(s) of a glass microfluidic device

a) The glass microfluidic device (of an internal volume of about 8 mL) was filled with 1 N NaOH solution in order to carry out a pretreatment of the internal wall(s). After 1 hour, the microstructure was washed with water, ethanol and then air dried.
b) 50 mg of PdCl₂ were dissolved in 2 mL of 1 N HCl. The aqueous solution was diluted with 500 mL ethanol. The thus obtained orange solution was introduced into the pretreated microstructure with a flow rate of 10 g/min while feeding hydrogen gas with a flow rate of 20 mL/min through another entry aperture of the microfluidic device. The formation and deposition of Pd(0) onto the internal wall(s) of the microfluidic device started immediately. The slight yellow colouring of the solution exiting from the microstructure showed that PdCl₂ had reacted.

The particle diameter of Pd(0) deposited on the internal wall(s) was comprised between 50 and 300 nm.

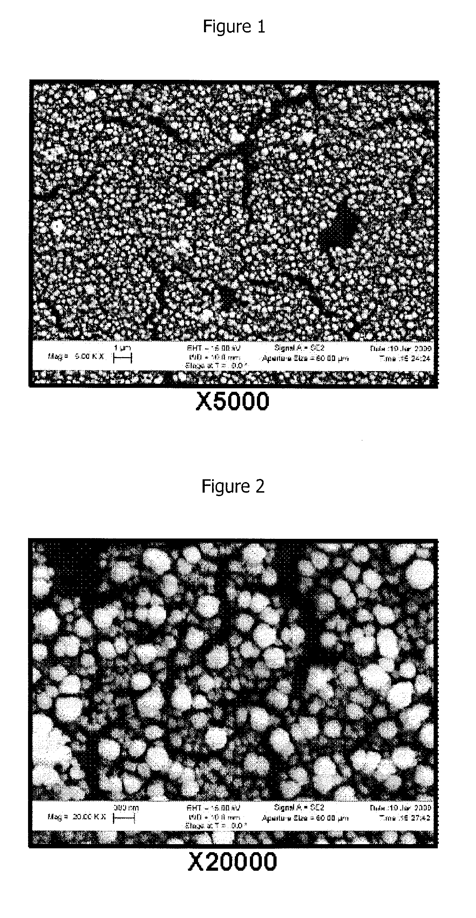

Figure 1 shows the deposited particles (isolated particles and/or agglomerates) at a 5000-fold magnification whereas Figure 2 shows said particles at a 20000-fold magnification. The SEM micrographs were obtained, from a fractured cross section of the microfluidic device coated with 4 nm of nickel, with a LEO FEG SEM coupled with a BRUKER EDX analysis and in secondary electron SE2 (topographic contrast).

### Comparative example 2: Test carried out without pretreatment of the internal wall(s)

The comparative example 2 was conducted in the same experimental conditions as those described in example 1 with the exception that the pretreatment step (step a) was not performed.

No formation of a solid or a deposit was observed. The colour of the solution did not change, indicating that no reaction took place.

Thus, this comparative example 2 showed that the pretreatment of the internal wall(s) with an organic base solution, here NaOH, is a determining step. The formation and deposition of Pd(0) does not occur without such a pretreatment.

### Comparative example 3: Test carried out with 50 mg of PtCl₄

The comparative example 3 was conducted in the same experimental conditions as those described in example 1 with the exception of replacing PdCl₂ with PtCl₄.

No formation of a solid or a deposit was observed. The colour of the solution did not change, indicating that no reaction took place.

### Comparative example 4: Test carried out with 50 mg RhCl₃·H₂O

The comparative example 4 was conducted in the same experimental conditions as those described in example 1 with the exception of replacing PdCl₂ with RhCl₃·H₂O.

No formation of a solid or a deposit was observed. The colour of the solution did not change, indicating that no reaction took place.

### Comparative example 5: Test carried out with 50 mg RuCl₃

The comparative example 5 was conducted in the same experimental conditions as those described in example 1 with the exception of replacing PdCl₂ with RuCl₃.

No formation of a solid or a deposit was observed. The colour of the solution did not change, indicating that no reaction took place.

Comparative examples 3 to 5 in respect of example 1 show that the method of the present invention does not work with platinum, rhodium and ruthenium.

### Example 6: Deposition of Pd(0) and hydrogenation of cinnamon ester in a glass microfluidic device

The hydrogenation of cinnamon ethyl ester is shown by scheme 1.

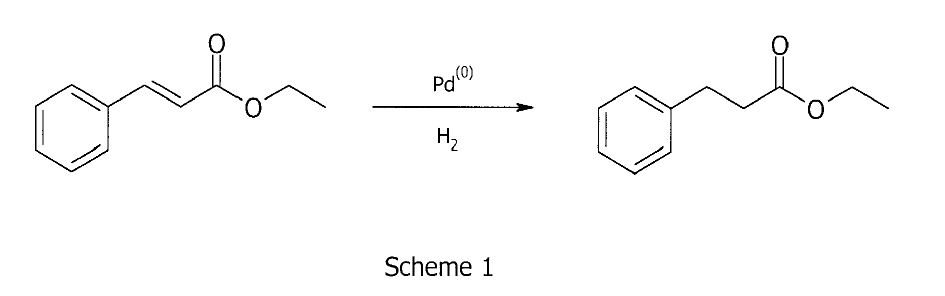

The glass microfluidic device (of a volume of about 8 mL) was filled with 1 N NaOH solution in order to carry out a pretreatment of the internal wall(s). After 1 hour, the microstructure was washed with water, ethanol and then air-dried.

A solution A consisting of a cinnamon ethyl ester in ethanol was prepared at a concentration of 1g/L. A second solution B was prepared by dissolving 75 mg PdCl₂ in 2 mL of 1 N HCl and then diluting the thus obtained solution with 1 L ethanol. The two resulting solutions were fed via a connector into a glass microstructure with a flow rate of 5 g/min each, while introducing hydrogen gas with a flow rate of 20 mL/min into said microstructure. These flow rate values correspond to the following flow rates expressed in mol/min: hydrogen gas ∼1 mmol/min, solution of palladium Pd(II) ∼2 nmol/min.

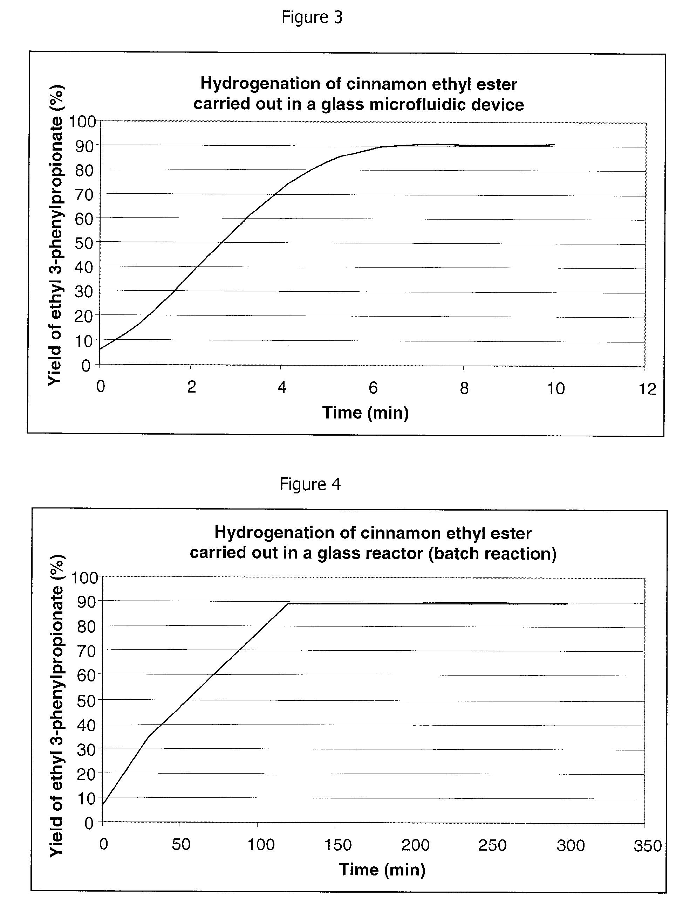

The ethyl 3-phenylpropionate results from the hydrogenation of cinnamon ethyl ester. The results of the hydrogenation reaction are summarized in Table 1 and illustrated in Figure 3.

**Table 1**

| Yield (%) | Time on stream (min) | Observations |
|---|---|---|
| 6.3 | 0 | Clean microfluidic device, deposition start |
| 18.7 | 1 | |
| 83.4 | 5 | |
| 90.8 | 10 | |

The increase in yield over the first minutes can be explained that at 0 min, no palladium Pd(0) is present in the microchannel(s), and then a sufficient coating of the internal wall(s) is only obtained after a certain time. See the increase of the yield during the first 10 minutes in Figure 1.

### Example 7: Deposition of Pd(0) and hydrogenation of cinnamon ester in a glass reactor

A batch experiment was performed using a round bottom flask supplied by Schott AG under the trademark Duran^{®} (borosilicate glass). Said round bottom flask was pretreated like the microstructure of example 6. Hydrogen gas, 100 mL of solution A and 100 mL of solution B as defined in example 6 were added in the flask at 1 bar while stirring at 1000 rpm.

The results of the hydrogenation reaction are summarized in Table 2 and illustrated in Figure 4.

**Table 2**

| Yield (%) | Time (min) | Observations |
|---|---|---|
| 6.3 | 0 | |
| 34.8 | 30 | black walls |
| 89.2 | 120 | clean walls, black solid on the bottom |
| 89.7 | 300 | |

The hydrogenation of cinnamon ethyl ester into ethyl 3-phenylpropionate under batch conditions lasted for 300 minutes in order to obtain a yield of 90%. See the increase of the yield in Figure 4. Thus, ethyl 3-phenylpropionate was formed in 90% yield 30 times faster with a glass microfluidic device (continuous reaction) than with a glass reactor (batch reaction).

However, the process of the present invention carried out either in a reactor suitable for batch reactions or in a reactor suitable for continuous reactions, provides the advantage of hydrogenating cinnamon ethyl ester under mild conditions of temperature and pressure while this kind of hydrogenation is usually performed at higher pressure.

### Example 8: Deposition of Pd(0) and reduction of 2-nitrobenzaldehyde in a glass microfluidic device

The reduction of 2-nitrobenzaldehyde is shown by scheme 2.

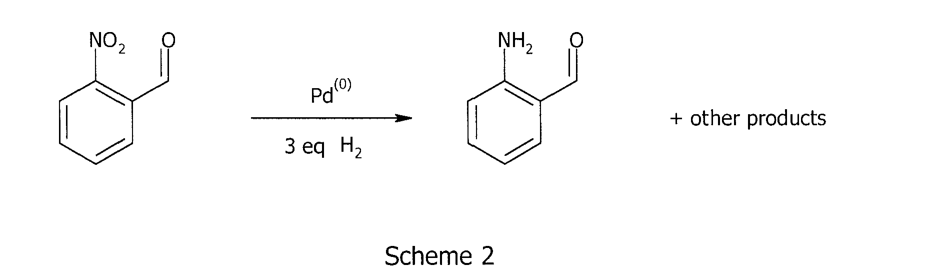

The glass microfluidic device was filled with 1 N NaOH solution in order to carry out a pretreatment of the internal wall(s). After 1 hour, the microstructure was washed with water, ethanol and then air-dried.

A solution A consisting of a 2-nitrobenzaldehyde solution in ethanol was prepared at a concentration of 1g/L. A second solution B was prepared by dissolving 75 mg PdCl₂ in 2 mL of 1 N HCl and then diluting the thus obtained solution with 1 L ethanol. The two resulting solutions were fed via a connector into a glass microstructure with a flow rate of 5 g/min each, while introducing hydrogen gas with a flow rate of 20 mL/min into said microstructure. These flow rate values correspond to the following flow rates expressed in mol/min: hydrogen gas ∼1 mmol/min, solution of palladium Pd(II) ∼2 nmol/min.

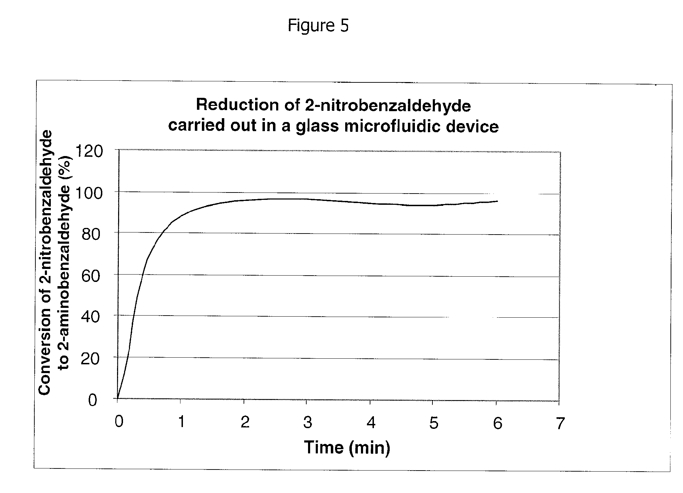

The 2-aminobenzaldehyde results from the reduction of 2-nitrobenzaldehyde. The results of the reduction reaction are summarized in Table 3 and illustrated in Figure 5.

**Table 3**

| Conversion (%) | Time on stream (min) | Observations |
|---|---|---|
| 0.0 | 0 | 5 g/min |
| 88.2 | 1 | |
| 94.0 | 5 | |
| 96.0 | 6 | |

After 1 min, 88% conversion of 2-nitrobenzaldehyde to 2-aminobenzaldehyde was reached (See Figure 5). Then, the conversion increased slightly and was stable after 5 minutes.

The process of the present invention provides the advantage of hydrogenating 2-nitrobenzaldehyde under mild conditions of temperature and pressure while this kind of hydrogenation is usually performed under more severe conditions, *i*.*e*. high pressure (about 4 x 10⁵ Pa).

## Claims

1. A process for the *in situ* generation of a catalyst and the deposition of said catalyst on the internal wall(s) of a glass, glass-ceramic or ceramic reactor, comprising:
a) contacting said internal wall(s) of said reactor with an inorganic base solution;
b) contacting the thus pretreated internal wall(s) with a solution containing a precursor of palladium Pd(0) while subjecting said solution to a reduction reaction, in order to deposit the Pd(0) formed *in situ* onto the pretreated internal wall(s).

2. The process according to claim 1, wherein the process is carried out under mild conditions, typically ambient temperature and atmospheric pressure.

3. The process according to claim 1 or 2, wherein the reactor is a glass reactor.

4. The process according to any one of claims 1 to 3, wherein the inorganic base is selected from the group consisting of hydroxides of the alkali metals, carbonates of the alkali metals and mixtures thereof, preferably sodium hydroxide, sodium carbonate, potassium hydroxide and potassium carbonate.

5. The process according to any one of claims 1 to 4, wherein the precursor of palladium Pd(0) is soluble in an aqueous solution.

6. The process according to any one of claims 1 to 5, wherein the precursor of palladium Pd(0) is selected from the group consisting of palladium(II) chloride, palladium(II) acetate, palladium(II) trifluoroacetate, palladium(II) bromide, palladium(II) nitrate, palladium(II) sulphate, palladium(II) acetylacetonate and mixtures thereof.

7. The process according to any one of claims 1 to 6, wherein the reduction reaction is carried out with a gaseous or liquid reducing agent, preferably hydrogen gas.

8. The process according to any one of claims 1 to 7, wherein the process is carried out in a reactor suitable for batch reactions.

9. The process according to any one of claims 1 to 7, wherein the process is carried out in a reactor suitable for continuous reactions, preferably in a microfluidic device.

10. The process according to any one of claims 1 to 9, wherein step b of the process is performed before carrying out any catalytic reaction inside the reactor.

11. The process according to any one of claims 1 to 9, wherein step b of the process is performed while carrying out a catalytic reaction inside the reactor.

12. The process according to claim 11, wherein said step b is carried out continuously or discontinuously.

13. The process according to any one of claims 1 to 12, wherein the reactor is intended to be used or used for carrying out reduction reactions, more particularly selected from the group consisting of hydrogenation, Heck reaction, Stille coupling and Negishi coupling.

14. Reactor, preferably microfluidic device, as may be obtained by the *in situ* generation and deposition of palladium Pd(0) on its internal wall(s) carried out according to the process of any one of claims 1 to 13.

15. Reactor according to claim 14, wherein the particle diameters of Pd(0) deposited on the internal wall(s) are equal to or less than 350 nm, preferably comprised between 50 and 300 nm.

16. A catalytic process, including the *in situ* generation of a catalyst and the deposition of said catalyst on the internal wall(s) of a glass, glass-ceramic or ceramic reactor carried out according to any one of claims 1 to 13 and/or carried out inside a reactor according to claim 14 or 15.
